# EUROPEAN PATENT APPLICATION

(11) **EP 4 625 754 A1**
(43) Date of publication of application: **01.10.2025**
(21) Application number: 24167402.7
(22) Date of filing: 28.03.2024
(51) Int. Cl.: H02J 7/00, B60L 53/80, H02J 7/34, B25J 19/00, B65G 1/04, B65G 57/03

(54) **A BATTERY**

(71) Applicant: AUTOSTORE TECHNOLOGY AS, 5578 Nedre Vats (NO)
(72) Inventor: Engelsgjerd, Svein, Nedre Vats (NO)
(74) Representative: Kilburn & Strode LLP

(57) **Abstract**

The disclosure relates to a method of charging a first battery assembly arranged for powering a robot both to move along rails of a storage grid and to move a gripping device of the robot relative to a body portion of the robot by transferring electrical energy from a second battery assembly to the first battery assembly.

## Description

### TECHNICAL FIELD

The disclosure relates to a battery for a container-handling vehicle. More particularly, it relates to a stackable battery assembly for a container-handling vehicle and a method of charging the same.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system having a grid of rails is arranged on top of the grid, along which robotic container-handling vehicles configured to lift containers from the grid can travel/ride. The container-handling vehicles are configured to transport containers from the grid and to deliver them to ports or stations at the periphery of the grid so that the goods within the container can be picked and packed.

The container-handling vehicles are battery powered and, when the charge in a container-vehicle's battery runs low, a charging operation can be performed in order to charge the battery.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Figs. 5A and 5B are perspective views of a battery assembly;
Fig. 6 is a perspective view of a container-handling vehicle and a plurality of stacks of battery assemblies;
Fig. 7 is a perspective view of robotic vehicle showing, from below, its gripping device and a battery assembly;
Fig. 8 is a cut-away schematic view of a battery assembly;
Fig. 9 is a schematic view of a stack of battery assemblies on top of a charger in a grid;
Fig. 10 shows a flow chart of method steps that may be performed according to the present disclosure and
Fig. 11 shows a flow chart of method steps that may be performed according to the present disclosure.

### DETAILED DESCRIPTION

In overview, the disclosure relates to a robot that can ride on a grid of rails of a storage system and raise and lower a gripping device that is able to independently pick up a container and lock onto a container lid. By having a lid locking ability in a gripping device that is also used to pick up containers, the robot can remove lids from containers and so there is no need to slow things down by removing lids when containers are at an egress port of the storage system (or to create a specialised lid removing robot).

### Automated storage and retrieval system overview

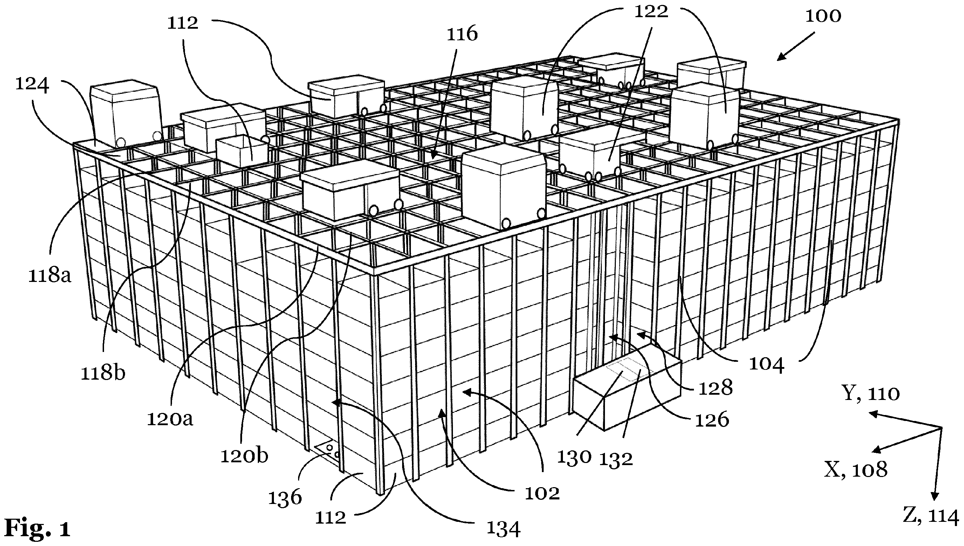

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 (which may be a grid of rails) and to transport bins 112 in both the X and Y directions 108, 110. The robots 122 are additionally configured to lift and lower bins 112 from/into the columns 102 in the Z direction 114 by way of one or more bands, wires, ropes etc., the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column. Additionally or alternatively, one or more battery columns 134 may be designated for the storage of stacks of battery assemblies for powering the robots 122 and such battery columns 134 may contain a respective charger 136 for delivering charge to battery assemblies stacked within the battery column 134.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

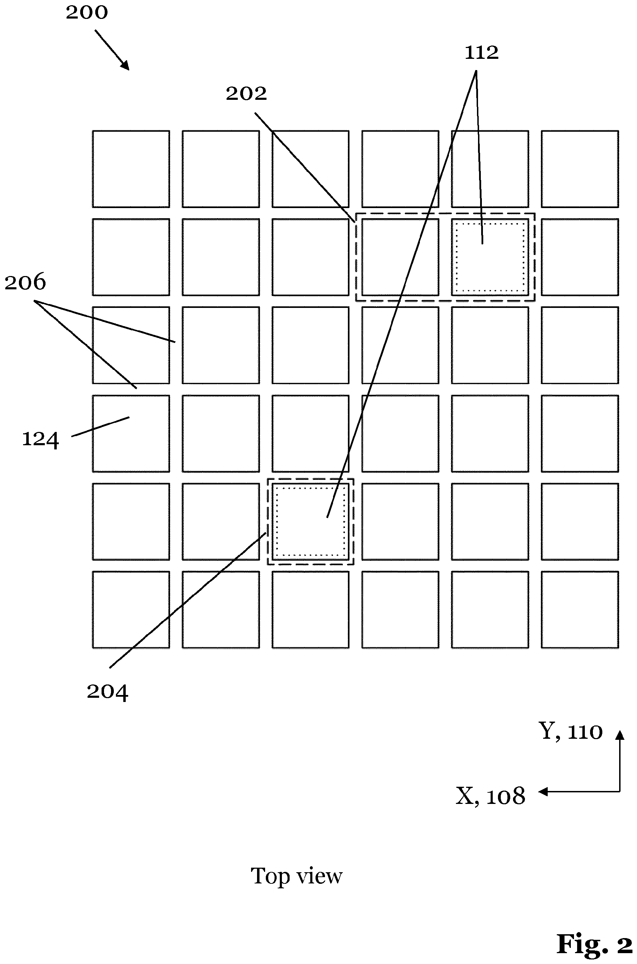

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

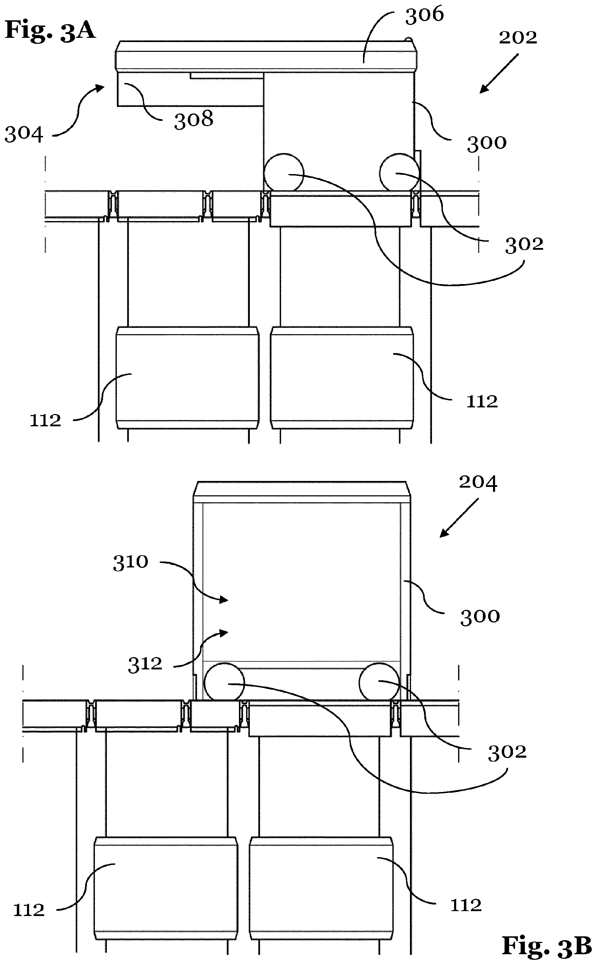

A first, 'cantilever' type of robot 202 is shown in more detail in Fig. 3A and includes a body (or body portion) 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306 - for example by way or one or more bands, wires, ropes etc. The gripping device 308 is configured to releasably grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

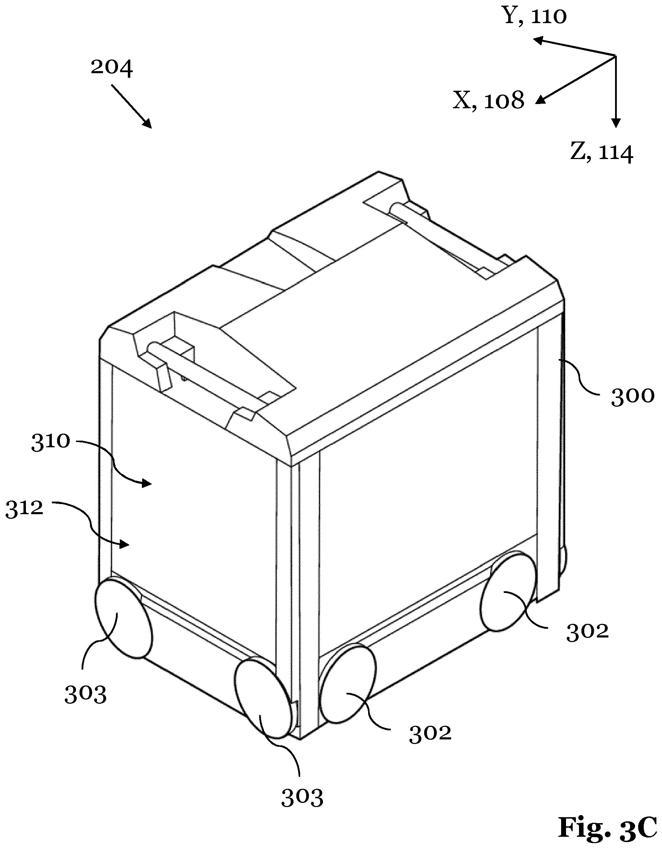

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

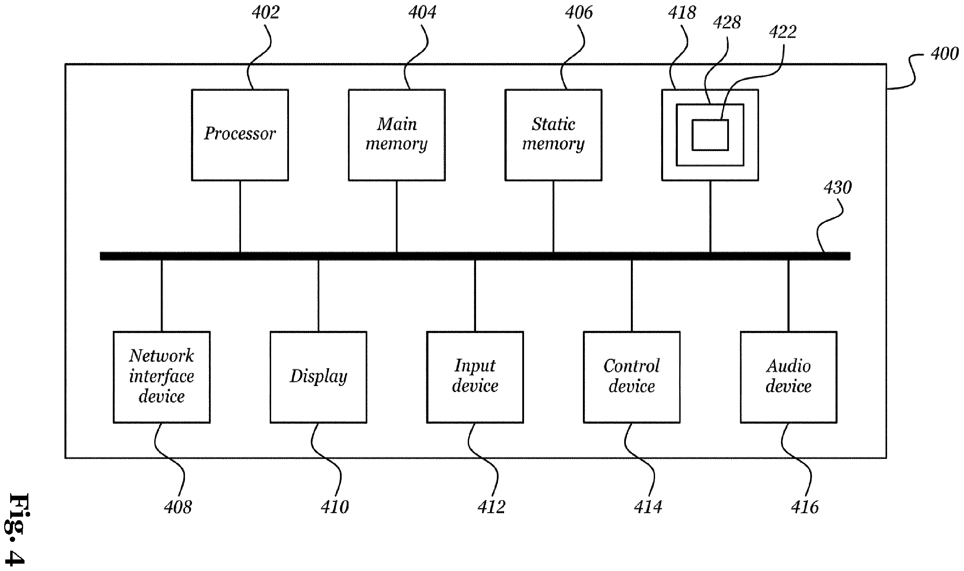

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 maybe a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Battery assembly

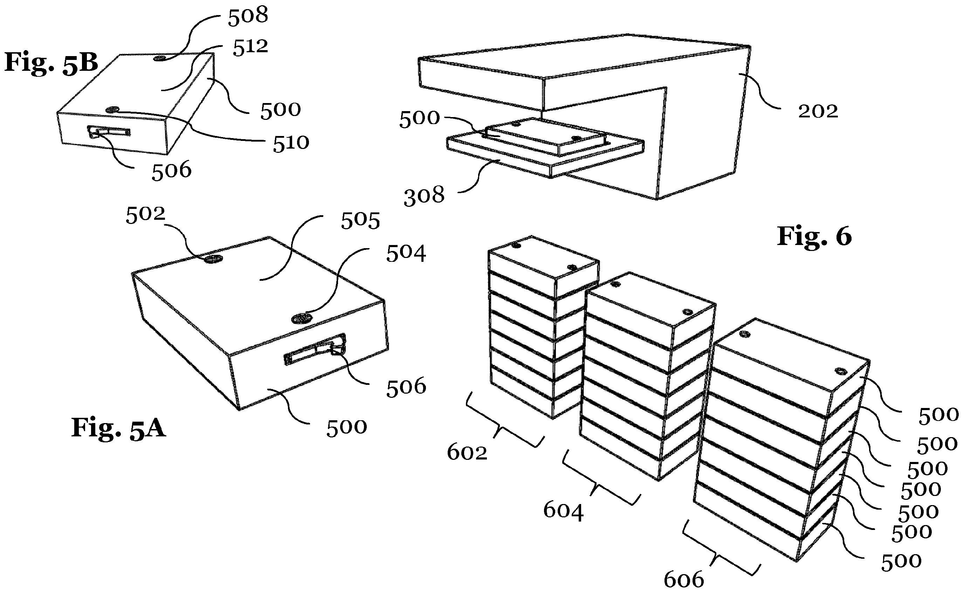

Fig. 5A shows a perspective view of a battery assembly 500. The battery assembly 500 has a positive terminal 502 and a negative terminal 504 on an upper surface 505 of the battery assembly 500. The battery assembly also has a battery assembly gripping device 506 for releasably gripping the battery assembly to a gripping device 308 of a robot 202. In this example, the battery assembly gripping device 506 is arranged to rotate about an axis approximately perpendicular to the upper surface of the battery assembly to move between an ungripped position wherein a gripping device 308 of a robot 202 when lowered onto the battery assembly 500 is not gripped to the griping device 308 and a gripped position wherein a gripping device 308 of a robot 202 that has been lowered onto the battery assembly 500 is gripped to the griping device 308. A person skilled in the art will recognise that alternative mechanisms may be employed for gripping the battery assembly 500 to the gripping device 308. As one possibility, the battery assembly does not have a battery assembly gripping device 506 and the gripping device 308 is arranged to releasably grip the battery assembly 500 to the gripping device 308. The battery assembly 500 also has positive and negative terminals on a lower surface thereof (not shown in the perspective view of Fig. 5A). The positive and negative terminals 502, 504 on the upper surface of the battery assembly 500 and the positive and negative terminals on the lower surface of the battery assembly 500 being arranged so that, when another such battery assembly is adjacent to (for example stacked on top of) the battery assembly 500, the positive and negative terminals 502, 504 on the upper surface of the lower battery assembly 500 make electrical contact with the respective positive and negative terminals on the lower surface of the upper battery assembly.

The positive and negative terminals on the upper and lower surfaces of the battery assembly may be coplanar with the respective upper and lower surfaces and/or may project/be recessed therefrom. As one example, they may be embodied by electrical contacts in plane with the respective surface. As one example, an upper surface terminal may project and the corresponding lower surface terminal may be recessed or vice versa and both terminals on one surface may project with both terminals on the other surface being recessed or one may project and the other on that surface be recessed with the opposite occurring on the other surface. The positive and negative terminals may take a number of different shapes - such as squares, rectangles, circles, cylinders, cylindrical holes, prisms, prismatic recesses, etc. As another possibility, the battery assembly may be arranged to wireless power transfer with an adjacent battery assembly - for example by way of inductive charging, and so in some cases the positive and negative terminals may not be present.

Fig. 5B shows a second perspective view of the battery assembly 500. The battery assembly 500 has a positive terminal 508 and a negative terminal 510 on a lower surface 512 of the battery assembly 500. The battery assembly gripping device 506 is also shown.

Fig. 6 is a perspective view of a robot 202 and a plurality of stacks 602, 604, 606 of battery assemblies 500 stored in adjacent battery columns 134 of the grid 100 (grid components not shown in order to avoid visual obstruction). Also shown is a battery assembly 500 releasably gripped to the gripping device 308 of the robot 202 such that, if the gripping device 308 of the robot 202 were to be lowered onto stack 602 (thus moving the battery assembly 500 within the grid 100) and released from being gripped to the gripping device 308, the battery assembly 500 shown gripped to the gripping device 308 in Fig. 6 would then be stacked on top of stack 602. In such a case, the positive and negative terminals on the lower side of the released battery assembly 500 could then electrically contact those on the upper surface of the topmost battery assembly 500 of stack 602 thereby enabling charging of the released battery assembly from one or more of the battery assemblies in stack 602 and/or a charger 136 located below stack 602. The robot 202 could then traverse the grid 100 so that it was above stack 604 (in this example) and lower gripping device 308 in order to pick up a charged battery assembly from, say, stack 604.

When gripped to the gripping device 308, and/or if subsequently gripped against the body portion 300 of the robot 202, the battery assembly 500 is able to transfer electrical energy to the robot 300 in order to power the robot 300 both to move along the rails of the storage grid 100 and to move the gripping device 308 of the robot 202 relative to the body portion 300 thereof. Electrical energy may be so transferred via one or more of: the positive and negative terminals 502, 504 of the battery assembly 500 and corresponding terminals on the gripping device 308 and/or the body portion 300 of the robot 202, wirelessly (for example by inductive power transfer), and or via one or more further electrical terminals (not shown) on the battery assembly 500 and corresponding terminals on the gripping device 308 and/or the body portion 300 of the robot 202.

The robot 300 may have a sensor for determining the amount of charge in a battery assembly that it grips in order that a determination may be made that that battery assembly should be placed in a battery column for charging. Additionally or alternatively, the control system may monitor the work done by the robot 300 in order to determine when a battery assembly change is required. The robot 300 may have a second battery/battery assembly for powering it after the gripped battery assembly has been placed in a battery column and before a replacement battery assembly has been gripped to the robot 300. Additionally or alternatively, the robot 300 may have a further non-battery based powering means, such as a capacitor or supercapacitor, for powering it after the gripped battery assembly has been placed in a battery column and before a replacement battery assembly has been gripped to the robot 300.

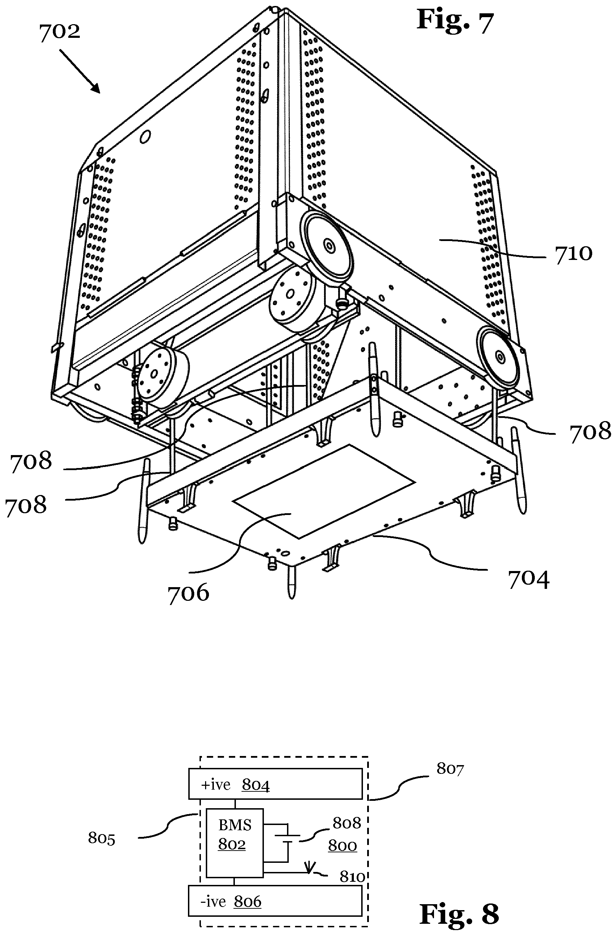

Whereas Fig. 6 has been described by reference to a 'cantilever' type of robot, the approached described herein may equally be employed with 'internal cavity' robots and Fig. 7 is a perspective view of an internal cavity robot 702 showing, from below, its gripping device 704 and a battery assembly 706 which may be the same as described above in relation to Fig. 5 and Fig. 6. Shown also in Fig. 7 are the bands 708 for raising and lowering the gripping device 704 relative to a body portion 710 of the robot.

Fig. 8 is a cut-away schematic view of a battery assembly 800 which may be the same as the battery assembly 500 described above in relation to Figs. 5A, 5B and 6. The battery assembly has a Battery Management System (BMS) electrically connected both to a positive terminal 804 of the battery assembly 800 and to a negative terminal 806 of the battery assembly. In this example, the positive and negative terminals 804, 806 project beyond a lower surface 805 of the battery assembly 800 and are recessed from an upper surface 807 of the battery assembly 800 and the positive and negative terminals observed from the upper surface 807 are electrically and physically continuous with the respective positive and negative terminals observed from the lower surface 805. The lower and upper surfaces 805 and 807 are shown respectively on the left and right of Fig. 8 to illustrate that the concepts described herein need not be applied only to vertical stacks of battery assemblies and could additionally or alternatively be applied to horizontal `stacks' or lines of touching (or adjacent) battery assemblies.

The BMS 802, which may be intelligent, is connected to a battery 808 of the battery assembly 800 which may comprise one or more battery cells and which the BMS 802 is arranged to control the charging and/or discharging of. The battery 808 being arranged for powering a robot both to move along rails of the storage grid and to move that robot's gripping device relative to its body portion.

The BMS 802 maybe arranged for communication with one or more of: battery management systems of other such battery assemblies, the charger of the storage grid, and/or a control system of the storage grid (for example, the control system of Fig. 4) and which may be a central control system, to determine a charging or discharging mode of operation for the battery assembly. The communication may be by way of an antenna 810 or by way of other technologies that the skilled person will be aware of such as optical or electrical communication. As one possibility, each battery assembly may have additional terminals on its upper and lower surfaces to enable electrical communication with battery assemblies/a charger that are located in the same battery column. The BMS 802 may be arranged to control the battery assembly to operate in the determined charging or discharging mode.

In the charging mode, the battery assembly 807 is arranged to receive charge via the positive and negative terminals 804 and 806 in order to charge the battery 808. The BS 802 may provide a direct electrical connection (or an equivalent thereto) between the positive terminal 804 of the battery assembly and a positive terminal of the battery 808 and may similarly provide a direct electrical connection (or an equivalent thereto) between the negative terminal 806 of the battery assembly and a negative terminal of the battery 808. In this manner, the voltage provided across the positive and negative terminals 804 and 806 is fully, or substantially, also provided across the terminals of the battery 808. Similarly, in the charging mode current flowing into the positive terminal 804 fully, or substantially fully, flows into the battery 808.

In the discharging mode, the battery assembly 807 is arranged to provide charge via the positive and negative terminals 804 and 806 in order to charge a battery of another battery assembly 800. The BMS 802 may control the battery assembly 807 so as to present a fixed voltage between its positive and negative terminals 804, 806 which may not be the same voltage as that across the terminals of the battery 808 - for example, the voltage may be stepped up and the BMS 802 may contain driver circuitry to maintain that fixed voltage between its positive and negative terminals 804, 806. Additionally, the BMS 802 may control the voltage between its positive and negative terminals 804, 806 so that it changes with time - for example by ramping up using a charge pump. Additionally or alternatively, the BMS 802 may control the battery assembly 807 so as to supply a fixed current from its positive terminal 804 and the BMS 802 may contain driver circuitry to maintain that fixed current Additionally, the BMS 802 may control the supplied current so that it changes with time - for example by ramping up.

In some examples, the BMS 802 maybe arranged to operate in a discharge mode having one or more of the following phases: a bulk mode wherein the current provided to a battery being charged is constant but its voltage ramps up, an absorption mode wherein the voltage is constant and the current provided decreases, a float mode wherein the voltage is constant and the current provided decreases or remains roughly constant, and an equalization mode wherein the voltage provided is high and the current is low. A four stage charging (of the battery being charged) cycle may be used when the following sequence is employed: bulk, absorption, float, equalization.

Although the above has been described with reference to the battery assembly having a positive terminal and a negative terminal, a person of skill in the art will recognise that those terms are relative to the battery assembly and that if the positive terminal of a first battery assembly were electrically connected to, say, a negative terminal of a second battery assembly (or ground), then the positive terminal of the first battery assembly could be described as being at a negative voltage relative to the positive terminal of the second battery assembly (or at a ground voltage). They would also appreciate that the same applied *mutatis mutandis* to the negative terminal of the battery assembly.

### Battery assembly stack and charger

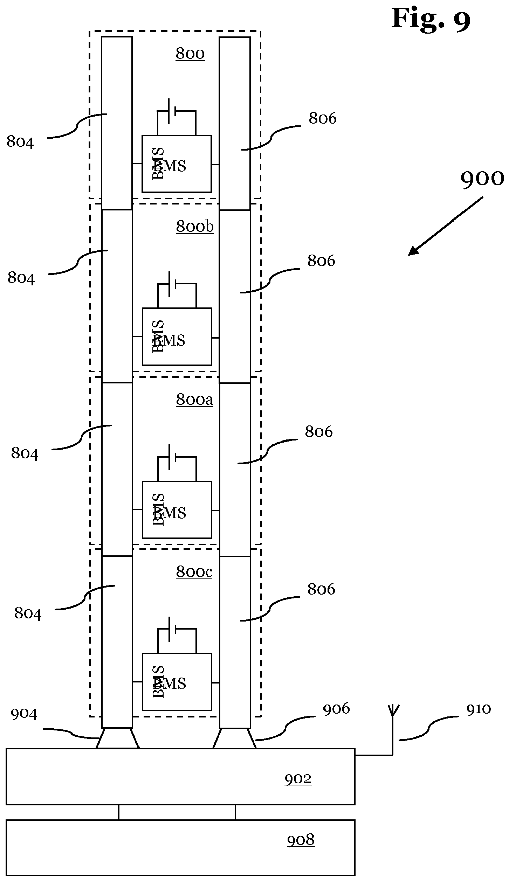

Fig. 9 is a schematic view of a stack 900 of battery assemblies 800, which may be the same battery assembly as described above in relation to Fig. 8, on a charger 902, which maybe the same charger as shown in Fig.1 using reference 136. The stack 900 of battery assemblies 800 is located in a battery column 134 of a grid 100 (not shown in Fig. 9) and the charger 902 may be located in a battery column 134 itself or slightly outside/below it. The battery charger 902 has a positive terminal 904 and a negative terminal 906 for electrically connecting the charger 902 to any battery assembly 800 that is stacked on it. The charger may be connected to an external power supply 908, such as a mains supply which may be AC.

The charger 902 may be arranged for communication with one or more of: battery management systems of any battery assemblies that are stacked on top of it and/or a control system of the storage grid (for example, the control system of Fig. 4) and which may be a central control system to determine a charging or discharging mode of operation for the battery assemblies. The communication may be by way of an antenna 910 or by way of other technologies that the skilled person will be aware of - such as optical or electrical communication.

As can be seen from Fig. 9, when a plurality of battery assemblies 800 are stacked on top of one another and on top of a charger 902, all of the positive terminals 804, 904 are in electrical contact and all of the negative terminals 806, 906 are also in electrical contact and the various battery assemblies 800 and charger 902 may be considered to be electrically connected in parallel. The combination of the adjacent (in this case physically touching) positive terminals 804, 904 and the physically touching negative terminals 806, 906 effectively forms two power rails via which electrical charge can be transferred to any of the battery assemblies 800 from the charger 902 and any one or more of the other battery assemblies 800. The stack of battery assemblies can thus act in effect as a large power supply enabling fast/surge charging of one (or more) of the battery assemblies in the stack.

As one example, a first battery assembly 800a may have a second battery assembly 800b located adjacent thereto (in this case stacked thereon) and may be operable to transfer electrical energy to the second battery assembly 800b. Furthermore, the first battery assembly may be stacked on a third battery assembly 800c and the first and third battery assemblies may be arranged to act in concert to transfer electrical energy from the first and third battery assemblies 800a, 800c to the second battery assembly 800b.

Although Fig. 9 has described a stack 900 of battery assemblies 800 stacked on top of a charger 902, the charger 902 need not be present in order for one or more of the battery assemblies 800 to transfer electrical energy (charge) therefrom to one or more others of the battery assemblies 800.

When storing a stack 900 of battery assemblies 800 in a battery column 134 having a charger 900, it is likely that the bottom-most battery assembly 800 will have been stored in the stack 900 for the longest amount of time (given that battery assemblies are added and removed via the top of the grid) and so will have had the most time to be charged by the charger 902 and will thus likely hold the most charge. This applies decrementally also to the battery assemblies stacked on top of the bottom-most battery assembly. It is therefore beneficial to transfer electrical energy from battery assemblies that are lower down to ones that are higher up (i.e. from those that are located further away from the rails (or top) of the grid 100 to those that are located closer to the rails (or top) of the grid 100.

Furthermore, with a charging process that transfers electrical energy from lower down battery assemblies 800 to those higher up, and given that those lower down battery assemblies 800 will have had more time to accumulate charge in their own batteries (to charge up) from the charger 902, a fast charge of a higher up battery assembly 800 may be delivered mainly (or entirely) from one or more lower down battery assemblies 800 without requiring that the charger 900 be arranged to perform fast charging. The demands on the charger 902 are consequently lower than if the charger was performing the entirety of the charging of the higher up battery assembly 800 thereby enabling the charger 902 to have a lower specification - such as a lower power and/or heat dissipation rating - than it would otherwise need. This can avoid the need for a charger configured for surge charging. As one possibility, the charger 902 may comprise a charge pump/trickle charger.

### Battery charging

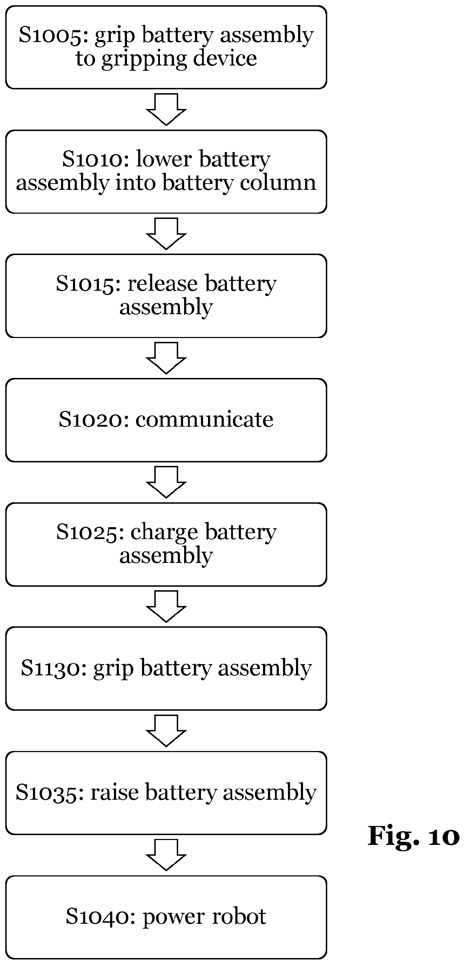

Fig. 10 shows a flow chart of method steps that may be performed according to the present disclosure. At step S1005, a battery assembly is gripped to the gripping device of a robot. It may be that step S1005 occurs some time before the subsequent steps of Fig. 10. As an example, in circumstances where the battery assembly is arranged to transfer electrical energy to the robot via the gripping device then step S1005 may occur when the robot picks up the battery assembly (by gripping the battery assembly to the griping device) after it has been charged up and then carries the battery assembly whilst performing normal grid operations (raising, transporting and lowering containers/battery assemblies) until the battery assembly becomes sufficiently depleted so as to require recharging. As another possibility, the battery assembly may be gripped to the body portion thereof during normal operation and only be gripped by the gripping device when it is about to be lowered onto (or raised from) a battery column.

At step S1010, the robot moves the battery assembly within the grid by lowering the gripping device and gripped battery assembly into the battery column before releasing the battery assembly onto a stack of other battery assemblies at step S1015.

At step S1020 communication in relation to the charging of the battery assembly occurs. This may be initiated by the BMS of the recently lowered battery assembly - for example by sending a radio or NFC communication once it determines that it has been lowered onto the battery column. Determination that the battery assembly has been lowered into the battery column may be made by the BMS - for example by detecting a voltage between its positive and negative terminals. Additionally or alternatively a sensor could be used to make the determination, or the robot may inform the battery assembly, for example by radio, that it has been released. The communication may be with BMSs of other battery assemblies in the battery column, with the charger and/or with the control system of the storage grid. The communication may indicate that the battery assembly has just been lowered onto the stack and/or the level of battery charge held by the battery of the battery assembly (for example an indication of a percentage charge) and may instigate a negotiation process between the BMS of the recently lowered battery assembly and one or more other BMSs of battery assemblies in the battery column in order to determine which battery assembly in the battery column should be first charged. As indicated before, it may be that the most recently lowered battery assembly is the one that most needs charging and so a default could be to always charge that battery assembly first.

Once it has be determined to charge the just lowered battery assembly, the BMSs of one or more other battery assemblies in the battery column are coordinated (or self-coordinate) to provide electrical charge to the just lowered battery assembly - for example by communicating to agree and set the voltage between their positive and negative terminals to be higher than the battery voltage of the battery of the just lowered battery assembly. Additionally or alternatively, the BMSs may be coordinated (or self-coordinate) so as to each provide a constant current output (which may be the same for each discharging battery assembly). The coordination may entail the sending of a communication containing parameters. For example, a charging voltage and/or current along with time points or thresholds for changing may be conveyed in the communication for receiving BMSs to use to configure themselves.

It may be that step S1020 is intentionally prolonged beyond the time required to communicate and determine which battery assembly to charge and to coordinate the BMSs. The intentional prolonging being so as to enable stabilisation of the voltage between the positive and negative terminals of the charge receiving battery assembly to occur.

At step S1025 electrical energy can be transferred to the battery of the just lowered battery assembly from one or more other battery assemblies in the battery column and this may be done in a constant voltage and/or constant current manner.

Additionally or alternatively, the charger may be communicated with and may set its output voltage or current so as to enable charging of the battery of the just lowered battery assembly.

Once the battery of the battery assembly that was charged at step S1025 has been charged to a required level, or sooner if a robot needs a topped up battery before then, the relevant robot manoeuvres itself over the battery column, lowers its gripping device and, at step S1030, grips that battery assembly. The battery assembly is then raised at step S1035 and then is used to power the robot at step S1040 - either directly via the gripping device, or by gripping the battery assembly to the body portion of the robot - for example so as to bring the positive and negative terminals of the battery assembly into contact with corresponding terminals on the body portion of the robot.

Although the flow chart of Fig. 10 illustrates one approach by which the apparatus described herein may be employed, it is far from the only method and, within the bounds of common sense, any or all of the steps of the method of Fig. 10 bar step S1025 may be omitted and/or the steps may be performed in different orders.

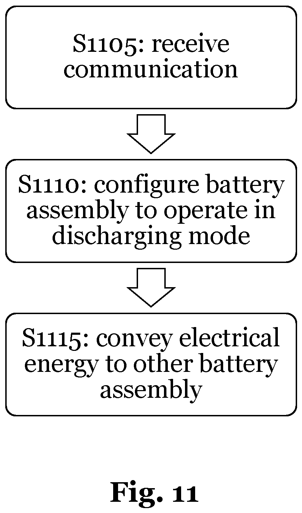

Fig. 11 shows a flow chart of method steps that may be performed according to the present disclosure. At step S1105, a communication is received by the BMS of a battery assembly located in a battery column and having a battery which is to some extent charged, the communication indicating that the battery assembly should operate in a discharging mode so as to transfer electrical charge to another battery assembly in the battery column. That communication may inform the BMS how to configure itself for discharge; for example a discharge voltage and/or current along with time points or thresholds for changing may be conveyed in the communication. Additionally or alternatively, the communication may be part of a negotiation between the BMS and those of one or more other BMSs and/or the charger in order to settle discharging parameters. At step S1110, the BMS of the battery assembly receiving the communication configures its battery assembly for discharge - which may be per parameters received in the communication - and then conveys electrical energy to the other battery assembly via it their terminals so as to charge the other battery assembly

The robots may be operated so as to lift, reposition/rearrange and lower battery assemblies in order to retrieve a 'most suitable' battery from the grid. As one example, it may be determined by the control system that a battery assembly halfway down a stack of battery assemblies in a battery column is fully charged and is the most preferrable battery assembly to retrieve and use and so a robot may be operated to lower its gripper and retrieve and move out of the way other battery assemblies located on top of the determined battery assembly in order that the determined battery assembly may be retrieved and used.

Although the above has been described with reference to a vertical stack of battery assemblies (possibly on top of a charger), a skilled person will appreciate that the concepts described herein may be applied equally to other configurations - such as one wherein the battery assemblies/charger are located horizontally adjacent one another (a horizontal stack instead of the above described vertical stack) and robots are operable to move alongside the grid. Similarly, whereas the above is described in relation to a grid having rails on top of it and which is accessed from the top, the approached described herein could equally be applied to a grid having rails underneath it and being accessed from the bottom (an upside down stack type approach.).

There is described herein a method of charging a first battery assembly arranged for powering a robot both to move along rails of a storage grid and to move a gripping device of the robot relative to a body portion of the robot by transferring electrical energy from a second battery assembly to the first battery assembly.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A method of charging a first battery assembly arranged for powering a robot both to move along rails of a storage grid and to move a gripping device of the robot relative to a body portion of the robot, the first battery assembly being adjacent to a second battery assembly in the storage grid, the method comprising transferring electrical energy from the second battery assembly to the first battery assembly.

2. The method of claim 1 wherein, during the transferring of electrical energy from the second battery assembly to the first battery assembly, the second battery assembly is located further away from the rails of the storage grid than the first battery assembly is.

3. The method of claim 2, wherein during the transferring the first battery assembly is located stacked on top of the second battery assembly.

4. The method of any preceding claim, further comprising:
gripping the first battery assembly to the gripping device; and
moving the gripping device relative to the body portion so that the first battery assembly moves to become adjacent to the second battery assembly.

5. The method of any preceding claim, wherein the first and second battery assemblies are electrically connected in parallel when adjacent,
optionally wherein the second battery assembly is electrically connected in parallel with and stacked upon one or more further battery assemblies and/or a charger and the method further comprises transferring electrical energy from the one or more further battery assemblies and/or the charger to the first battery assembly

6. The method of any preceding claim, further comprising determining to operate the second battery assembly in a discharging mode based on one or more communications with:
a battery management system of the first battery assembly;
one or more battery management systems of other battery assemblies electrically connected in parallel with the second battery assembly;
a charger of the storage grid, the charger being electrically connected in parallel with the second battery assembly; and/or
a control system of the storage grid.

7. The method of any preceding claim, further comprising the second battery assembly supplying one or both of a constant current and a constant voltage to the first battery assembly.

8. A battery assembly for powering a robot both to move along rails of a storage grid and to move a gripping device of the robot relative to a body portion of the robot, the battery assembly being arranged:
to transfer electrical energy to the robot via the gripping device and/or the body portion when positioned thereagainst;
to be releasably gripped to the gripping device and thence moved within the storage grid by the robot;
so that, when a second such battery assembly is located adjacent thereto, electrical energy can be transferred between the battery assemblies.

9. The battery assembly of claim 8 further arranged so that, when the battery assembly is stacked on a third such battery assembly, electrical energy can be transferred from the battery assembly and the third battery assembly to the second battery assembly.

10. The battery assembly of claim 9, the battery assembly having:
positive and negative electrical terminals on an upper side of the battery assembly arranged to contact respective positive and negative electrical terminals on a lower side of the second such battery assembly when the second such battery assembly is stacked on top of the battery assembly, and
positive and negative electrical terminals on a lower side of the battery assembly arranged to contact respective positive and negative electrical terminals on an upper side of the third such battery assembly when the battery assembly is stacked on top of the third such battery assembly.

11. The battery assembly of claim 10, wherein one or both of:
A) one of the positive terminals of the battery assembly projects beyond its respective side of the battery and the other of the positive terminals of the battery assembly is recessed relative to its respective side of the battery;
B) one of the negative terminals of the battery assembly projects beyond its respective side of the battery and the other of the negative terminals of the battery assembly is recessed relative to its respective side of the battery.

12. The battery assembly of any of claims 8 to 11, further comprising a battery management system arranged to:
communicate with one or more of: battery management systems of other such battery assemblies, a charger of the storage grid, and/or a control system of the storage grid to determine a charging or discharging mode of operation for the battery assembly; and
control the battery assembly to operate in the determined charging or discharging mode.

13. The battery assembly system of claim 12 wherein the battery management system is arranged, when the battery assembly is operating in the discharging mode, to cause the battery assembly to charge the second battery assembly at one or both of a constant current and a constant voltage.

14. A system comprising a storage grid containing a charger, the charger being arranged so that, when the battery assembly of any of claims 8 to 13 is stacked thereon, electrical energy can be transferred between the charger and the battery assembly.

15. A computer readable medium carrying computer-executable instructions which, when executed by one or more processors, cause the method of any of claims 1 to 7 to be carried out.
